# NOUVEAU FASCICULE DE BREVET EUROPEEN

(11) **EP 1 595 082 B2**
(45) Date de publication et mention de la décision concernant l'opposition: **09.11.2011**
(45) Mention de la délivrance du brevet: 14.06.2006
(21) Numéro de dépôt: 04711394.9
(22) Date de dépôt: 16.02.2004
(51) Int. Cl.: F16D 1/00

(54) **DISPOSITIF DE TRANSMISSION DE COUPLE A DOUBLE VOLANT AMORTISSEUR, EN PARTICULIER POUR VEHICULE AUTOMOBILE.**
DREHMOMENTÜBERTRAGUNGSVORRICHTUNG MIT EINEM DÄMPFENDEN ZWEIMASSENSCHWUNGRAD, FÜR EIN KRAFTFAHRZEUG
TORQUE TRANSMISSION DEVICE WITH DUAL DAMPING FLYWHEEL, IN PARTICULAR FOR MOTOR VEHICLES

(30) Priorité: 20.02.2003 FR 0302122
(43) Date de publication de la demande: 16.11.2005
(73) Titulaire: Valeo Embrayages, 80009 Amiens Cedex 1 (FR)
(72) Inventeur: THERY, Pascal, F-80000 Amiens (FR)
(74) Mandataire: Jeuland, Mickaël
(86) Numéro de dépôt international: PCT/FR2004/050063
(87) Numéro de publication internationale: WO 2004/076878

(56) Documents cités:
- EP-A- 0 412 683
- EP-A- 1 167 811
- EP-A1- 1 371 875
- EP-A2- 0 789 162
- EP-A2- 1 413 795
- DE-A1- 19 519 363
- GB-A- 2 085 381

## Description

L'invention concerne un dispositif de transmission de couple, en particulier pour véhicule automobile du type comprenant un double volant amortisseur et des moyens commandés de solidarisation en rotation du volant primaire et du volant secondaire, ces moyens de solidarisation permettant de passer la fréquence de résonance du double volant sans risque de détériorer l'amortisseur de torsion qui relie les deux volants d'inertie en rotation ou la transmission en aval du volant d'inertie secondaire.

On sait qu'un double volant amortisseur présente une fréquence de résonance qui correspond à une excitation par le moteur thermique à une vitesse de rotation inférieure au régime de ralenti, de sorte que c'est pendant les phases de démarrage et d'arrêt du moteur qu'il faut s'opposer à des oscillations de grande amplitude du volant d'inertie secondaire. On a déjà proposé (voir, par exemple EP 1 167 811) pour cela de solidariser en rotation les deux volants d'inertie de façon temporaire pendant les phases de démarrage et d'arrêt du moteur, les moyens de solidarisation étant commandés par la force centrifuge ou par des moyens de détection de l'accélération angulaire relative des volants d'inertie.

Le document DE 195 19 363 décrit un dispositif de transmission de couple, en particulier pour véhicule automobile, comprenant deux volants d'inertie primaire et secondaire coaxiaux et reliés en rotation par un amortisseur de torsion, le volant primaire étant solidaire d'un arbre menant et le volant secondaire étant relié à un arbre mené par un embrayage piloté, des moyens de commande dudit embrayage comprenant un actionneur, et des moyens de solidarisation en rotation des volants d'inertie primaire et secondaire, portés par un rebord cylindrique du volant d'inertie primaire et par un couvercle de l'embrayage précité, actionnés par des moyens d'actionnement d'un plateau de pression dudit embrayage et comprenant un premier disque porté par le rebord cylindrique du volant primaire.

La présente invention a notamment pour but des moyens de solidarisation des volants d'inertie et des moyens de commande de ces moyens de solidarisation qui sont plus simples, plus économiques et plus efficaces que dans la technique antérieure.

Elle propose, à cet effet, un dispositif de transmission de couple, selon la revendication 1.

Ainsi, les deux volants d'inertie du dispositif selon l'invention sont solidaires en rotation pendant les phases de démarrage et d'arrêt du moteur du véhicule, ce qui empêche des oscillations de grande amplitude du volant secondaire au passage par la fréquence de résonance, puis en fonctionnement normal du véhicule, lorsque l'actionneur est commandé pour fermer l'embrayage et transmettre un couple à l'arbre mené, les deux volants d'inertie sont désolidarisés l'un de l'autre et l'amortisseur de torsion reliant ces deux volants peut jouer son rôle de filtrage des vibrations et des régularités de couple transmises par l'arbre menant.

Selon une autre caractéristique de l'invention, les moyens de solidarisation des deux volants d'inertie sont maintenus dans une position de serrage ou de solidarisation des volants par des moyens élastiques.

Ces moyens élastiques fournissent une pré-charge que l'actionneur doit équilibrer pour désolidariser les volants. Quand l'actionneur est à commande hydraulique, la pré-charge correspond à une pression de seuil en dessous de laquelle l'embrayage ne change pas d'état.

L'actionneur ne peut donc agir sur l'embrayage que lorsque cette pression hydraulique d'alimentation dépasse la valeur de seuil précitée Cette valeur de seuil met sous pression l'actionneur et l'embrayage avant un changement d'état de l'embrayage, ce qui permet de rattraper des jeux et des courses mortes. La régulation de l'embrayage devient plus précise, avec une fonction serrage de l'embrayage qui est plus linéaire par rapport à la variation de pression.

Selon encore une autre caractéristique de l'invention, les moyens de solidarisation des volants d'inertie sont radialement à l'extérieur de l'embrayage.

Cela permet notamment une diminution de l'encombrement axial du dispositif selon l'invention.

De préférence, les moyens précités de solidarisation sont formés par un embrayage comportant des disques serrés axialement.

Le premier disque est serré dans la position de repos de l'actionneur entre le second disque et un troisième disque porté par le couvercle de l'embrayage.

Selon une autre caractéristique de l'invention, l'actionneur comporte un capteur de position d'un élément de commande mobile et ce capteur permet de déterminer par apprentissage la position en début de course qui autorise la rotation relative des volants sans changer l'état de l'embrayage.

Dans un mode de réalisation préféré de l'invention, l'actionneur de l'embrayage comprend un vérin hydraulique axial commandé en pression et monté autour de l'arbre mené, ce vérin comportant un piston annulaire guidé en translation autour de l'arbre mené et agissant sur une butée de débrayage reliée au plateau de pression.

En variante, l'actionneur de l'embrayage est un actionneur mécanique comprenant des moyens à rampe hélicoïdale de transformation de mouvement.

Dans une application particulièrement intéressante de l'invention, relative à la commande des boîtes de vitesses mécaniques robotisées, le dispositif comprend un deuxième embrayage monté en parallèle avec le premier embrayage cité et destiné à relier le volant secondaire à un deuxième arbre mené coaxial au premier arbre mené cité, et des moyens de commande du deuxième embrayage, les deux embrayages ayant un même couvercle d'embrayage porté par le plateau de réaction du premier embrayage cité.

Dans un mode de réalisation particulier de l'invention, le premier embrayage est monté axialement entre le deuxième embrayage et le volant d'inertie primaire et le deuxième embrayage comprend un plateau de réaction qui est traversé par des poussoirs d'actionnement du plateau de pression du premier embrayage.

Ces poussoirs d'actionnement peuvent avantageusement entraîner un disque appartenant aux moyens précités de solidarisation des deux volants d'inertie et ils sont reliés à l'actionneur précité par des moyens débrayeurs, ces derniers comprenant un diaphragme annulaire monté sur le couvercle d'embrayage et comprenant une partie radialement externe formant rondelle Belleville et agissant sur les poussoirs d'actionnement, et des doigts radiaux dirigés vers l'axe de rotation du dispositif et coopérant par une butée de débrayage avec l'actionneur précité.

De préférence, les moyens de commande du deuxième embrayage comprennent un deuxième vérin hydraulique qui est monté à l'intérieur du premier actionneur cité.

Selon d'autres caractéristiques de l'invention :
- le volant d'inertie primaire est un volant flexible,
- l'amortisseur de torsion est radialement à l'intérieur du volant secondaire et du premier embrayage,
- l'amortisseur de torsion comprend des ressorts courts à disposition circonférencielle,
- une extrémité radialement interne du couvercle d'embrayage est montée sur l'actionneur précité par l'intermédiaire d'un palier formant butée axiale de reprise d'efforts.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle en coupe axiale d'un dispositif selon l'invention
- la figure 2 est une vue semblable représentant une variante de réalisation.

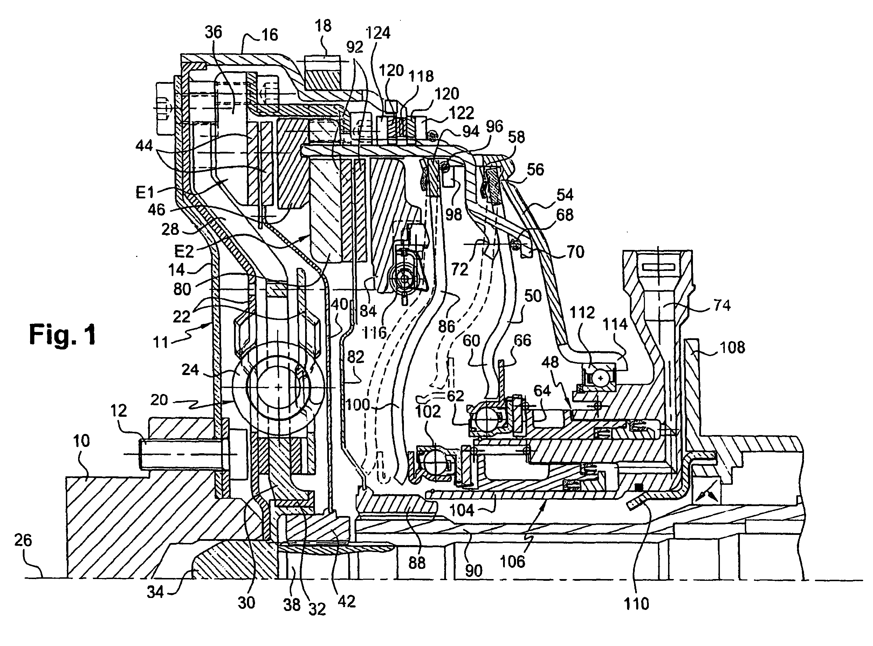

En figure 1, la référence 10 désigne l'extrémité d'un arbre menant, qui est ici le vilebrequin d'un moteur à combustion interne de véhicule automobile, et sur lequel un volant d'inertie primaire 11 est fixé au moyen de vis 12. Le volant d'inertie primaire 11 comporte une tôle annulaire flexible 14 dont la partie radialement interne est fixée sur l'arbre 10 par les vis 12 et dont la partie radialement externe comprend un rebord cylindrique 16 s'étendant dans le sens opposé à l'arbre 10 et portant une couronne de démarreur 18.

La partie radialement externe de la tôle annulaire 14 porte également un élément d'entrée d'un amortisseur de torsion 20, cet élément d'entrée étant formé par deux rondelles de guidage parallèles 22 comportant des fenêtres dans lesquelles sont logés des ressorts à spires 24 à disposition circonférencielle autour de l'axe de rotation 26 du dispositif, ces ressorts coopérant avec l'élément de sortie 28 de l'amortisseur de torsion qui est constitué par un voile annulaire dont la périphérie interne 30 est centrée et guidée en rotation au moyen d'un palier lisse 32 et d'une pièce intermédiaire 34 sur l'extrémité de l'arbre menant 10.

La périphérie radialement externe du voile annulaire 28 est solidaire d'un plateau annulaire radial 36 qui fait partie du volant d'inertie secondaire et qui forme un plateau de réaction d'un premier embrayage E1 destiné à relier sélectivement l'arbre menant 10 à un premier arbre mené 38 qui est ici un arbre d'entrée d'une boîte de vitesses mécanique robotisée.

Le premier embrayage E1 comprend un disque de friction 40 qui est fixé à un moyeu 42 solidaire en rotation d'une extrémité du premier arbre mené 38 et qui porte des garnitures de friction 44 destinées à être serrées entre le plateau de réaction 36 et un plateau de pression 46 sous commande d'un actionneur comportant un premier vérin hydraulique 48 qui s'étend axialement autour du premier arbre mené 38 et qui agit sur le plateau de pression 46 par l'intermédiaire d'un diaphragme annulaire 50 et de poussoirs 52 orientés parallèlement à l'axe de rotation 26. Les poussoirs 52 sont liés entre eux par une partie annulaire située à l'arrière, du côté du diaphragme 50 et radialement à l'intérieur des parties des poussoirs orientées parallèlement à l'axe de rotation.

Le diaphragme annulaire 50 est monté sur un couvercle d'embrayage 54 qui s'étend à l'intérieur du rebord cylindrique 16 du volant d'inertie primaire et qui est fixé par des vis sur le plateau de réaction 36 du premier embrayage E1.

Le diaphragme annulaire comprend une partie annulaire radialement externe 56 formant rondelle Belleville, qui est calée axialement entre un rebord du couvercle d'embrayage 54 et un anneau 58 autobloquant, et il comporte des doigts radiaux 60 s'étendant vers l'axe de rotation et venant en appui à leur extrémité sur une butée de débrayage 62 portée par le piston 64 du vérin 48. Pour réduire l'encombrement axial du dispositif, les extrémités radialement internes des doigts 60 sont appliquées sur une rondelle 66 qui est fixée sur l'arrière de la butée d'embrayage 62, c'est-à-dire du côté opposé à l'arbre menant 10, et à l'extérieur de cette butée.

Les doigts radiaux 60 du diaphragme annulaire 50 s'appuient par l'intermédiaire d'un jonc 68 sur des pattes 70 des poussoirs 52 associés au plateau 46 de pression de l'embrayage E1, et s'étendent entre ces pattes 70 et d'autres pattes 72 issues des poussoirs 52 et situées en avant des pattes 70, c'est-à-dire du côté du plateau de pression 46. Ainsi, quand le vérin 48 est alimenté en liquide sous pression par une tubulure d'admission 74, le piston 64 de ce vérin est déplacé vers l'avant et pousse la butée d'embrayage 62 qui, au moyen de la rondelle 66, déplace vers l'avant les doigts radiaux 60 du diaphragme annulaire 50 jusque dans la position représentée en traits pointillés, ce déplacement étant transmis par les pattes 72 et les poussoirs 52 au plateau de pression 46 qui serre les garnitures de friction 44 sur le plateau de réaction 36, pour la transmission d'un couple à l'arbre mené 38 au moyen du disque de friction 40 et du moyeu 42.

Quand on fait chuter la pression de commande du vérin 48, la rondelle Belleville du diaphragme 50, par l'intermédiaire des doigts 60, repousse le piston 64 vers la droite sur le dessin et le ramène dans la position représentée en traits pleins, ce mouvement de retour étant transmis par le jonc annulaire 68 et les pattes 70 aux poussoirs 52 qui ramènent le plateau de pression 46 dans la position représentée où l'embrayage E1 est ouvert. De façon classique, le plateau de pression 46 peut être relié au couvercle d'embrayage 54 par des languettes élastiques circonférencielles ou tangentielles de rappel du plateau de pression 46 dans la position débrayée.

Un deuxième embrayage E2 est logé à l'intérieur du couvercle d'embrayage 54, en arrière du premier embrayage E1 et comprend un plateau de réaction 80 solidaire du couvercle d'embrayage 54 et formant butée définissant la position de repos du plateau de pression 46 du premier embrayage E1, le deuxième embrayage E2 comprenant également un disque de friction 82 et un plateau de pression 84 associé à un diaphragme annulaire 86, le disque de friction 82 étant fixé à sa périphérie interne sur un moyeu 88 solidaire en rotation d'un second arbre mené 90 qui est tubulaire et coaxial au premier arbre mené 38 et qui s'étend autour de celui-ci pour former le second arbre d'entrée de la boîte de vitesses robotisée. La partie radialement externe du disque de friction 82 porte des garnitures de friction 92 qui sont serrées par le plateau de pression 84 sur le plateau de réaction du deuxième embrayage E2 quand le plateau de pression 84 est poussé vers l'avant par le diaphragme annulaire 86.

Les poussoirs 52 du plateau de pression 46 s'étendent radialement à l'extérieur du plateau de pression 84 et du disque de frictions 82 et passent à travers des ouvertures du plateau de réaction 80.

Le diaphragme 86 comporte une partie annulaire radialement externe 94 qui est en appui sur un jonc 96 porté par des pattes 98 du couvercle d'embrayage 54, et des doigts radiaux 100 s'étendant vers l'axe de rotation et venant en appui sur une butée d'embrayage 102 montée à l'extrémité d'un piston 104 d'un vérin hydraulique 106 qui est coaxial au premier vérin hydraulique 48 et qui s'étend à l'intérieur de celui-ci, entre le piston 64 et le second arbre mené 90.

Les deux vérins 48 et 106 forment un ensemble unitaire qui est porté par le carter 108 de la boîte de vitesses robotisée et qui est centré sur ce carter par exemple au moyen d'une bague 110 comme représenté. Le cylindre du vérin 48 porte un palier 112 de guidage en rotation de l'extrémité arrière 114 du couvercle d'embrayage 54, ce palier 112 formant également une butée de retenue axiale et de reprise d'effort du couvercle d'embrayage 54 en empêchant tout déplacement de celui-ci vers l'avant.

Des moyens 116 de rattrapage automatique d'usure des garnitures de friction 92 sont montés sur le plateau de pression 84 du deuxième embrayage E2, entre ce plateau de pression et les doigts radiaux 100 du diaphragme annulaire 86.

Dans le dispositif qui vient d'être décrit, le volant d'inertie primaire 10 est formé de la tôle annulaire flexible 14 et des éléments solidaires de cette tôle annulaire, à savoir le rebord cylindrique 16, la couronne de démarreur 18 et les éléments d'entrée 22 de l'amortisseur de torsion 20, tandis que le volant d'inertie secondaire comprend le plateau de réaction 36 du premier embrayage, le couvercle d'embrayage 54 et les éléments portés par ce couvercle, à savoir le plateau de pression 46 du premier embrayage E1, le plateau de réaction 80 du second embrayage E2 et son plateau de pression 84 ainsi que le dispositif 116 de rattrapage automatique d'usure et les diaphragmes annulaires 50 et 86.

Des moyens de solidarisation en rotation des deux volants d'inertie sont montés radialement à l'extérieur du volant secondaire, plus précisément autour du plateau de pression 84 du second embrayage E2 à l'extérieur du couvercle 54, et comprennent un disque 118 porté par l'extrémité arrière du rebord cylindrique 16 du volant d'inertie primaire et deux disques de serrage 120 montés de part et d'autre du disque 118 et portés par le couvercle d'embrayage 54, ces deux disques 120 étant eux-même situés entre une butée arrière 122 solidaire du couvercle d'embrayage 54 et une butée avant 124 formée par des pattes radiales orientées vers l'extérieur issues des poussoirs 52 du plateau de pression 46 du premier embrayage E1.

Les deux disques de serrage 120 coulissent axialement sur le couvercle d'embrayage 54 autour de celui-ci et sont solidarisés en rotation avec lui par l'intermédiaire de dentures internes en prise avec une denture externe correspondante du couvercle 54.

Ces moyens de solidarisation des deux volants d'inertie sont actifs dans la position représentée aux dessins, qui est une position de repos de l'actionneur formé par le vérin 48, et solidarisent en rotation les deux volants d'inertie quand le premier embrayage E1 est ouvert.

Le diaphragme annulaire 50 agissant sur le piston 64 du vérin 48 est conçu pour s'opposer au déplacement vers l'avant de ce piston tant que la pression de commande du vérin 48 n'atteint pas une valeur seuil prédéterminée, qui est par exemple de l'ordre de 10 bars (1 MPa).

La pression de service du vérin 48 est par exemple comprise entre 10 et 30 bars (1 et 3 MPa) et peut atteindre 60 bars en pointe (6 MPa). Les valeurs de pression de commande inférieures à la pression de seuil permettent un rattrapage des courses mortes et donc une commande plus linéaire et plus précise du début du serrage de l'embrayage E1 qui se produit lorsque la pression de commande du vérin 48 est supérieure à la pression de seuil précitée.

Dans l'agencement décrit, les moyens de solidarisation des deux volants d'inertie en rotation sont commandés en ouverture dès le début du déplacement vers l'avant d des poussoirs 52, avant le début du serrage ou de la fermeture du premier embrayage E1. Les deux volants d'inertie sont donc déjà désolidarisés en rotation lorsque le premier embrayage E1 commence à remplir sa fonction de transmission de couple entre l'arbre menant 10 et le premier arbre mené 38.

Le dispositif selon l'invention fonctionne de la façon suivante :

Quand on démarre le moteur du véhicule automobile, la pression d'alimentation des vérins 48 et 106 est sensiblement nulle, les embrayages E1 et E2 sont ouverts et les deux volants d'inertie sont solidarisés en rotation par serrage des disques 118 et 120 entre les pattes 124 des poussoirs d'actionnement 52 et le disque 122 porté par le couvercle d'embrayage 54, sous l'action du diaphragme annulaire 50 du premier embrayage.

Grâce à la liaison en rotation des deux volants d'inertie, on évite les problèmes au passage par la féquence de résonance du double volant amortisseur entre une vitesse de rotation nulle et le régime de ralenti du moteur du véhicule automobile.

Ensuite, pour faire avancer le véhicule, il faut fermer l'embrayage E1 et pour cela commander le vérin 48 par une pression hydraulique supérieure à la pression de seuil imposée par le diaphragme annulaire 50. Dès que la pression hydraulique de commande du vérin 48 dépasse cette pression de seuil, les deux volants d'inertie sont désolidarisés en rotation, puis l'embrayage E1 commence à se fermer pour la transmission d'un couple moteur à l'arbre mené 38.

Au ralenti, la pression d'alimentation du vérin 48 peut être nulle (cas où le régime de résonance est proche du régime de ralenti) ou bien elle peut être égale à la pression de seuil précitée, de sorte que les deux volants d'inertie sont alors désolidarisés l'un de l'autre en rotation et que l'embrayage E1 est prêt à être commandé en fermeture, les courses mortes ayant été rattrapées.

Ensuite, au cours du déplacement du véhicule, les deux volants d'inertie restent désolidarisés l'un de l'autre en rotation, la pression d'alimentation du vérin 48 étant toujours au moins égale à la pression de seuil, que l'embrayage E1 soit ouvert ou fermé.

A l'arrêt du moteur, les embrayages E1 et E2 sont ouverts et la pression d'alimentation du vérin 48 est réduite sensiblement jusqu'à zéro pour provoquer la solidarisation en rotation des deux volants d'inertie, ce qui évite les problèmes au passage par la fréquence de résonance.

De préférence, l'annulation de la pression d'alimentation du vérin est suivie d'une temporisation (de 10 à 50 ms environ par exemple) permettant de vider la chambre d'alimentation du vérin avant d'arrêter le moteur par coupure de l'injection de carburant ou de l'allumage, ce qui assure la solidarisation des volants d'inertie avant que l'on repasse par la fréquence de résonance du dispositif.

Un autre avantage du dispositif selon l'invention est que l'amortisseur de torsion 20 monté entre les deux volants d'inertie peut être équipé de ressorts courts à raideur plus élevée, ce qui se traduit par une fréquence propre plus élevée.

Bien entendu, le second embrayage E2 peut être commandé par un vérin hydraulique 106 comme représenté aux dessins, ou bien par tout autre moyen, par exemple par un système classique à fourchette ou par un actionneur mécanique comprenant des moyens de transformation d'un mouvement de rotation en une translation de la butée 62, ces moyens étant par exemple du type à rampe hélicoïdale et cet actionneur pouvant être commandé par un fluide. De même, les deux embrayages E1 et E2 peuvent être du type représenté en figure 1 où ils comprennent chacun deux plateaux, ou d'un autre type, par exemple dans lequel les plateaux de réaction des deux embrayages sont réunis et formés par un seul plateau, les plateaux de pression étant alors disposés de façon symétrique d'un côté et de l'autre de ce plateau de réaction.

Les moyens de solidarisation en rotation des volants d'inertie primaire et secondaire peuvent être du type représenté aux dessins, où le disque 118 solidaire du volant d'inertie primaire peut être réalisé en une matière plastique appropriée chargée de fibres de verre et est serré entre deux disques métalliques 120 solidaires en rotation du volant d'inertie secondaire, ou bien d'un autre type par exemple un disque portant des garnitures de friction dès lors que le serrage de ces disques provoque la solidarisation en rotation des volants d'inertie.

De même, le serrage de ces moyens de solidarisation en rotation est commandé par les moyens d'actionnement 52 du plateau de pression 46 de l'embrayage E1.

Les moyens de solidarisation des volants en rotation peuvent également comprendre des moyens pour transmettre en permanence un couple réduit dit *"frottement d'hystérésis",* quand les volants sont désolidarisés. Ce frottement dissipe l'énergie d'oscillation relative entre les volants et amortit cette oscillation relative. On peut pour cela ajouter une élasticité axiale, soit par un des disques précités, soit par un disque complémentaire, ayant une forme conique ou une forme ondulée dans le sens périphérique.

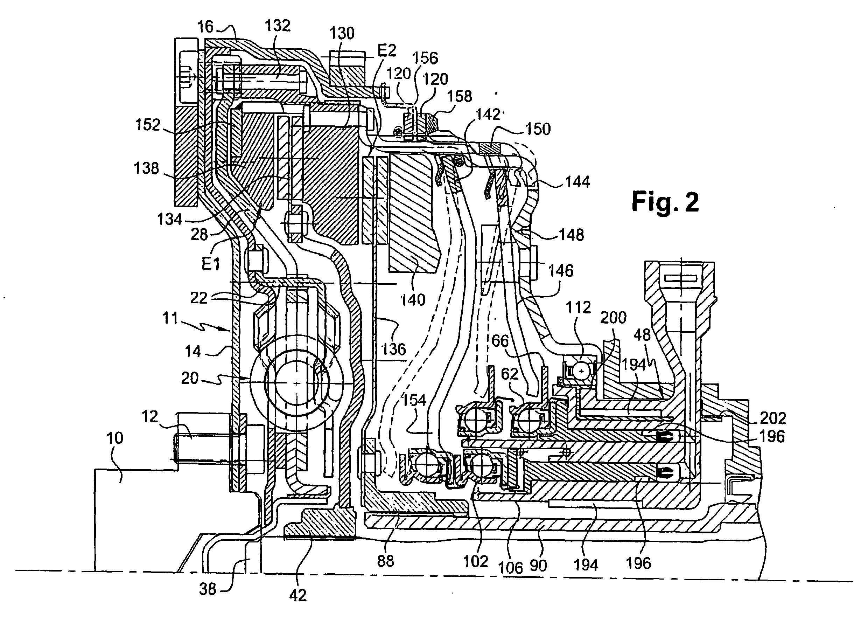

Dans la variante de réalisation de la figure 2, l'arbre moteur 10 est relié aux arbres menés 38 et 90 par un double volant amortisseur et par deux embrayages E1 et E2 ayant un même plateau de réaction. Le volant primaire 11 comprend une tôle annulaire flexible 14 fixée à l'arbre moteur 10 par des vis 12, la tôle 14 portant des rondelles de guidage 22 fixées l'une à l'autre de l'amortisseur de torsion 20 dont le voile annulaire 28 est relié au volant d'inertie secondaire qui comprend, entre autres, le plateau de réaction 130 commun aux deux embrayages. Le plateau de réaction 130 est fixé par des vis, rivets 132 ou analogues au voile annulaire 28 et coopère d'un côté (vers l'avant ou côté arbre moteur 10) avec un disque de friction 134 de l'embrayage E1 et de l'autre côté (vers l'arrière ou côté boîte de vitesses) avec un disque de friction 136 de l'embrayage E2.

L'embrayage E1 comprend un plateau de pression 138 situé entre le voile annulaire 28 et le plateau de réaction 130 et l'embrayage E2 comprend un plateau de pression 140 situé entre le plateau de réaction 130 et un diaphragme annulaire 142 monté entre un rebord annulaire d'un couvercle d'embrayage 144 et un anneau autobloquant, le couvercle 144 étant fixé au plateau de réaction 130 et s'étendant vers l'arrière pour être centré et maintenu par un palier 112 formant butée axiale de reprise d'efforts, porté par le vérin 48 de commande de l'embrayage E1.

Le piston du vérin 48 porte une butée d'embrayage 62 qui agit au moyen d'une rondelle 66 sur les extrémités des doigts radiaux d'un diaphragme annulaire 146 monté en bascule autour d'une nervure annulaire 148 du couvercle d'embrayage 144 et dont la périphérie extérieure est en appui sur l'extrémité arrière de poussoirs longitudinaux 150 qui s'étendent à l'extérieur du plateau de pression 140 et qui traversent la périphérie du plateau de réaction 130, les extrémités avant de ces poussoirs étant fixées par soudure sur une rondelle 152 montée sur une face avant du plateau de pression 138 de l'embrayage E1.

La périphérie externe du diaphragme 146 est maintenue entre un rebord de l'extrémité des poussoirs 150 et un anneau autobloquant monté sur ces poussoirs.

Le diaphragme annulaire 142 de l'embrayage E2 est en appui par les extrémités de ses doigts radiaux 154 sur une butée d'embrayage 102 portée par le piston d'un vérin annulaire 106 coaxial au vérin 48 et monté à l'intérieur de celui-ci autour des arbres menés 38 et 90.

Des moyens de solidarisation en rotation des volants d'inertie comprennent une rondelle 156 portée par l'extrémité arrière d'un rebord cylindrique 16 du volant primaire 11 et deux disques 120 de serrage de cette rondelle, qui coulissent sur le couvercle 144 et sont serrés par les poussoirs 150 au moyen d'une butée annulaire 158 solidaire de ces poussoirs.

Dans la figure 2, les éléments qui ont des chiffres de référence identiques à ceux des éléments de la figure 1 ont la même structure et/ou la même fonction qu'en figure 1.

Le fonctionnement du dispositif de la figure 2 est le suivant :

Au repos, les embrayages E1 et E2 sont ouverts et les volants d'inertie primaire et secondaire sont solidarisés en rotation par les disques 120 serrés sur la rondelle 156. Quand la pression de commande du vérin dépasse une valeur seuil équilibrée par le diaphragme annulaire 146, les moyens de solidarisation des volants s'ouvrent, puis quand la pression de commande du vérin 48 augmente encore, le diaphragme 146 bascule autour de la tôle annulaire 148 du couvercle d'embrayage et ferme l'embrayage E1 au moyen des poussoirs 150 qui agissent en traction sur le plateau de pression 138.

De façon générale, le fonctionnement de ce dispositif est identique à celui déjà décrit en référence à la figure 1.

Par ailleurs, les vérins 48, 106 d'actionnement des deux embrayages sont équipés de capteurs de suivi du déplacement de leurs pistons, ces capteurs étant du type inductif et comprenant chacun une bobine 194 montée sur une paroi du cylindre du vérin correspondant, et un anneau conducteur 196 qui est porté par le piston correspondant et qui entoure ou est entouré par la bobine associée 194, cet anneau étant déplaçable en translation avec le piston du vérin sensiblement d'une extrémité à l'autre de la bobine lors de l'actionnement des embrayages.

Chaque bobine 194 est alimentée en tension électrique par des conducteurs. Une analyse par un calculateur de la réponse à un signal envoyé permet de suivre le déplacement axial du piston.

Le capteur de déplacement du piston permet de déterminer une position du piston pour laquelle les volants d'inertie ne sont plus solidarisés en rotation et l'embrayage est encore ouvert, la pression de commande du vérin étant faiblement supérieure à la valeur seuil précitée.

En pratique, le système de commande du moteur du véhicule mesure les positions du piston qui correspondent respectivement à un état initial où les volants sont solidarisés en rotation et au point de léchage de l'embrayage (début du serrage) puis détermine une position intermédiaire du piston pour laquelle les volants ne sont plus solidaires et l'embrayage est complètement ouvert. Cela évite de déterminer cette position intermédiaire à partir de la pression de commande, ce qui serait moins précis et dans certains cas difficile à réaliser.

De plus, une tôle de renfort 200 est intégrée par surmoulage au cylindre du vérin 48 pour mieux supporter le serrage de la bague interne du palier 112 et aussi pour un centrage arrière comme indiqué en 202 sur le carter de la boîte de vitesses.

On notera enfin que les rondelles de guidage 22 de l'amortissement de torsion sont fixées l'une à l'autre par des rivets et que la rondelle arrière traverse le voile annulaire 28 pour être fixée sur la rondelle avant.

## Revendications

1. Dispositif de transmission de couple, en particulier pour véhicule automobile, comprenant deux volants d'inertie primaire et secondaire coaxiaux et reliés en rotation par un amortisseur de torsion (20), le volant primaire (11) étant solidaire d'un arbre menant (10) et le volant secondaire étant relié à un arbre mené (38) par un embrayage piloté (E1), des moyens de commande dudit embrayage comprenant un actionneur (48), et des moyens de solidarisation en rotation des volants d'inertie primaire et secondaire, ces moyens de solidarisation en rotation étant commandés par l'actionneur (48) précité pour lier en rotation les deux volants d'inertie quand l'actionneur est dans une position de repos et pour autoriser leur rotation relative au début de la course de l'actionneur depuis sa position de repos, ledit embrayage (E1) étant ouvert dans la positon de repos de l'actionneur (48) et les moyens de solidarisation étant portés par un rebord cylindrique du volant d'inertie primaire (11) et par un couvercle (54) de l'embrayage (E1) précité, et étant actionnés par des moyens d'actionnement d'un plateau de pression (46) dudit embrayage (E1) et comprenant un premier disque (118) porté par le rebord cylindrique (16) du volant primaire et au moins un second disque (120) monté coulissant sur le couvercle d'embrayage (54) et entraîné par des moyens d'actionnement (52) du Plateau de pression (46).

2. Dispositif selon la revendication 1, **caractérisé en ce que** les moyens de solidarisation des volants d'inertie sont maintenus dans une position de liaison en rotation de ces volants par des moyens élastiques (50) agissant sur l'actionneur pour le maintenir en position de repos.

3. Dispositif selon la revendication 2, **caractérisé en ce que** l'actionneur (48) est commandé par une pression hydraulique et est maintenu en position de repos par les moyens élastiques (50) quand sa pression hydraulique de commande est inférieure à une valeur seuil prédéterminée.

4. Dispositif selon l'une des revendications précédentes, **caractérisé en ce que** les moyens de solidarisation en rotation des volants d'inertie sont radialement à l'extérieur de l'embrayage.

5. Dispositif selon l'une des revendications précédentes, **caractérisé en ce que** les moyens de solidarisation sont formés par un embrayage comportant des disques serrés axialement.

6. Dispositif selon l'une quelconque des revendications 1 à 5, **caractérisé en ce que** le premier disque (118) est serré dans la position de repos de l'actionneur (48), entre le second disque (120) et un troisième disque (120) porté par le couvercle d'embrayage (54).

7. Dispositif selon l'une quelconque des revendications 1 à 6, **caractérisé en ce que** le premier disque (118) porte des garnitures de friction ou est en matière plastique.

8. Dispositif selon la revendication 6 ou 7, **caractérisé en ce que** les deuxième et troisième disques (120) ont des dentures internes de solidarisation en rotation avec le couvercle d'embrayage (54) et sont en appui axial sur des butées ou des pattes radiales (122,124) du plateau de pression (46) ou de ses moyens d'actionnement (52) et du couvercle d'embrayage (54).

9. Dispositif selon l'une des revendications précédentes, **caractérisé en ce que** l'actionneur précité comprend un vérin hydraulique axial (48) monté autour de l'arbre mené (38), ce vérin (48) emportant un piston annulaire (64) guidé en translation autour de l'arbre mené et agissant sur une butée de débrayage (62) reliée audit plateau de pression (46).

10. Dispositif selon l'une des revendications 1 à 7, **caractérisé en ce que** l'actionneur est un actionneur mécanique par exemple à rampe hélicoïdale.

11. Dispositif selon l'une des revendications 2 à 10, **caractérisé en ce que** les moyens élastiques agissant sur l'actionneur (48) et sur les moyens de solidarisation des volants en rotation sont formés par le diaphragme annulaire (50) de l'embrayage (E1) précité.

12. Dispositif selon l'une des revendications précédentes, **caractérisé en ce qu'**il comprend un deuxième embrayage (E2), monté en parallèle avec le premier embrayage cité (E1) et destiné à relier le volant secondaire à un deuxième arbre mené (90) coaxial au premier arbre mené (38), les deux embrayages ayant un même couvercle d'embrayage (54) porté par le plateau de réaction (36) du premier embrayage cité (E1).

13. Dispositif selon la revendication 12, **caractérisé en ce que** le premier embrayage (E1) est monté axialement entre le deuxième embrayage (E2) et le volant d'inertie primaire (11) et **en ce que** le deuxième embrayage (E2) comprend un plateau de réaction (80) traversé par des poussoirs (52) d'actionnement du plateau de pression (46) du premier embrayage (E1).

14. Dispositif selon la revendication 13, **caractérisé en ce que** lesdits poussoirs d'actionnement (52) comportent des pattes radiales (124) faisant partie des moyens de solidarisation des volants d'inertie en rotation.

15. Dispositif selon la revendication 13, ou 14, **caractérisé en ce que** lesdits poussoirs d'actionnement (52) sont reliés à l'actionneur (48) du premier embrayage (E1) par un diaphragme annulaire (50).

16. Dispositif selon l'une des revendications 12, à 15. **caractérisé en ce que** les moyens de commande du deuxième embrayage (E2) comprennent un deuxième actionneur formé par un vérin hydraulique axial (106) monté à l'intérieur du vérin (48) du premier actionneur.

17. Dispositif selon l'une des revendications précédentes, **caractérisé en ce que** le volant primaire (11) est un volant flexible.

18. Dispositif selon l'une des revendications précédentes, **caractérisé en ce que** l'amortisseur de torsion (20) est radialement à l'intérieur du volant secondaire et du premier embrayage (E1).

19. Dispositif selon l'une des revendications précédentes, **caractérisé en ce que** l'amortisseur de torsion (20) comprend des ressorts courts (24) à disposition circonférencielle.

20. Dispositif selon l'une des revendications précédentes, **caractérisé en ce qu'**une extrémité (114) du couvercle d'embrayage (54) est montée sur ledit actionneur (48) par l'intermédiaire d'un palier (112) formant butée axiale de reprise d'effort.

21. Dispositif selon l'une des revendications précédentes, **caractérisé en ce que** les moyens de désolidarisation produisent un couple réduit de frottement d'hystérésis quand les volants sont désolidarisés en rotation.

22. Dispositif selon l'une des revendications 3 à 21, **caractérisé par** une temporisation entre l'annulation de la pression de commande de l'actionneur (48) et l'arrêt d'un moteur d'entraînement de l'arbre menant (10).

23. Dispositif selon l'une des revendications précédentes, **caractérisé en ce que** l'actionneur (48) comporte un capteur (194,196) de position d'un élément de commande mobile.

24. Dispositif selon la revendication 23, **caractérisé en ce que** le capteur de position (194,196) permet de déterminer par apprentissage la position en début de course qui autorise une rotation relative des volants d'inertie sans changer l'état de l'embrayage (E1).

## Claims

1. A torque transmission device, in particular for a motor vehicle, comprising two coaxial primary and secondary inertia flywheels, which are coupled together in rotation through a torsion damper (20), the primary flywheel (11) being fixed with respect to a driving shaft (10) and the secondary flywheel being coupled to a driven shaft (38) through a controllable clutch (E1), with control means for the said clutch comprising an actuator (48), and rotational coupling means for coupling the primary and secondary inertia flywheels together, these rotational coupling means being controlled by the said actuator (48) whereby to couple the two inertia flywheels together when the actuator is in a rest position, and to permit their relative rotation at the start of the course of travel of the actuator from its rest position, the said clutch (E1) being open in the position of rest of the actuator (48) and the coupling means being supported by a cylindrical flange of the primary inertia flywheel (11) and by a cover plate (54) of the said clutch (E1), and being actuated by actuating means of a pressure plate (46) of the said clutch (E1), and comprising a first disc (118) which is supported by the cylindrical flange (16) of the primary flywheel, and at least one second disc (120) which is mounted for sliding movement on the clutch cover plate (54) and driven by the actuating means (52) of the pressure plate (46).

2. A device according to Claim 1, **characterised in that** the rotational coupling means for the inertia flywheels are maintained in a position for coupling these flywheels together in rotation by resilient means (50) acting on the actuator to maintain it in the rest position.

3. A according to Claim 2, **characterised in that** the actuator (48) is controlled by a hydraulic pressure and is maintained in its rest position by the resilient means (50) when its hydraulic control pressure is below a predetermined threshold value.

4. A device according to one of the preceding Claims, **characterised in that** the rotational coupling means for the inertia flywheels are radially outside the clutch.

5. A device according to one of the preceding Claims, **characterised in that** the coupling means consist of a clutch which comprises discs axially dumped together.

6. A device according to any one of Claims 1 to 5, **characterised in that**, in the rest position of the actuator (48), the first disc (118) is camped between the second disc (120) and a third disc (120) which is supported by the clutch cover plate (54).

7. A device according to any one of Claims 1 to 6, **characterised in that** the first disc (118) supports friction liners or is made of plastics material.

8. A device according to Claim 6 or 7, **characterised in that** the second and third discs (120) have sets of internal teeth for coupling them in rotation with the clutch cover plate (54), and are supported axially on stops or radial lugs (122, 124) of the pressure plate (46) or its actuating means (52), and of the clutch cover plate (54).

9. A device according to one of the preceding Claims **characterised in that** the said actuator comprises an axial hydraulic jack (48) which is mounted around the driven shaft (38), this jack (48) including an annular piston (64) which is guided in translation around the driven shaft, and acting on a crutch release stop (62) which is coupled to the said pressure plate (46).

10. A device according to one of Claims 1 to 7, **characterised in that** the actuator is a mechanical actuator, which for example has a helical ramp.

11. A device according to one of Claims 2 to 10, **characterised in that** the resilient means which act on the actuator (48) and on the rotational coupling means for the flywheels consist of the annular diaphragm (50) of the said clutch (E1).

12. A device according to one of the preceding Claims, **characterised in that** it includes a second clutch (E2), mounted in parallel with the said first clutch (E1) and adapted to couple the secondary flywheel to a second driven shaft (90) which is coaxial with the first driven shaft (38), the two clutches having a common clutch cover plate (54) which is supported by the reaction plate (36) of the said first clutch (E1).

13. A device according to Claim 12, **characterised in that** the first crutch (E1) is mounted axially between the second clutch (E2) and the primary inertia flywheel (11), and **in that** the second clutch (E2) has a reaction plate (80) through which pusher elements (52), for actuating the pressure plate (46) of the first crutch (E1) extend.

14. A device according to Claim 13, **characterised in that** the said actuating pusher elements (52) include radial lugs (124) which are part of the rotational coupling means for the inertia flywheels.

15. A device according to Claim 13 or 14, **characterised in that** the said actuating pusher elements (52) are coupled to the actuator (48) of the first clutch (E1) through an annular diaphragm (50).

16. A device according to one of Claims 12 to 15, **characterised in that** the means for controlling the second clutch (E2) comprise a second actuator, which consists of an axial hydraulic jack (106) mounted inside the jack (48) of the first actuator.

17. A device according to one of the preceding Claims, **characterised in that** the primary flywheels (11) is a flexible flywheel.

18. A device according to one of the preceding Claims, **characterised in that** the torsion damper (20) is radially inside the secondary flywheel and the first clutch (E1).

19. A device according to one of the preceding Claims, **characterised in that** the torsion damper (20) included circumferentially disposed short springs (24).

20. A device according to one of the preceding Claims, **characterised in that** one end (114) of the clutch cover plate (54) is mounted on the said actuator (48) by means of a bearing (112) constituting an axial stop for recovery of force.

21. A device according to one of the preceding Claims, **characterised in that** the uncoupling means produce a reduced hysteresis friction torque when the flywheel are uncoupled from rotating together.

22. A device according to one of Claims 3 to 21, **characterised by** a time delay between the cessation of the control pressure from the actuator (48) and the stopping of a motor which drives the driving shaft (10).

23. A device according to one of the preceding Claims, **characterised in that** the actuator (48) includes a sensor (194, 196) for detecting the position of a movable control element.

24. A device according to Claim 23, **characterised in that** the position sensor (194, 196) permits determination by learning, of the position at the start of the course of travel which allows relative rotation of the inertia flywheels without changing the state of the clutch (E1).

## Patentansprüche

1. Drehmomentübertragungsvorrichtung, insbesondere für Kraftfahrzeuge, umfassen zwei koaxiale Schwungräder, ein primäres und ein sekundäres, die durch einen Torsionsdämpfer (20) rotatorisch miteinander verbunden sind, wobei das primäre Schwungrad (11) fest mit einer Antriebswelle (10) und das sekundäre Schwungrad durch eine gesteuerte Kupplung (E1) mit einer getriebenen Welle (38) verbunden ist, Steuermittel der Kupplung, die ein Stellglied (48) umfassen, sowie rotatorische Verbindungsmittel des primären Schwungrades und des sekundären Schwungrads, wobei diese rotatorischen Verbindungsmittel durch das Stellglied (48) gesteuert werden, um die beiden Schwungräder drehfest zu verbinden, wenn sich das Stellglied in einer Ruhestellung befindet und um deren relative Drehung zu Beginn des Hubs des Stellglieds von seiner Ruhestellung aus zu erlauben, wobei die Kupplung (E1) in der Ruhestellung des Stellglieds (48) offen ist und wobei die Verbindungsmittel durch einen zylinderischen Rand des primären Schwungrades (11) sowie durch einen Deckel (54) der Kupplung (E1) getragen und durch Stellmittel einer Anpressplatte (46) dieser Kupplung (E1) betätigt werfen und eine vom zylindrischen Rand (16) des primären Schwungrads getragene erste Scheibe (118) sowie zumindest eine zweite Scheibe (120) umfassen, die verschiebbar auf dem Deckel der Kupplung (54) montiert ist und durch Stellmittel (52) der Anpressplatte (46) angetrieben wird.

2. Vorrichtung nach Anspruch 1, **dadurch gekennzeichnet, dass** die Verbindungsmittel der Schwungräder durch elastische Mittel (50) in einer drehfesten Verbindungsstellung dieser Schwungräder gehalten werden, wobei die elastischen Mittel (50) auf das Stellglied wirken, um es in Ruhestellung zu halten.

3. Vorrichtung nach Anspruch 2, **dadurch gekenzeinchnet, dass** das Stellglied (48) durch einen hydraulischen Druck gesteuert wird und dass es durch das elastische Mittel (50) in Ruhestellung gehalten wird, wenn sein hydraulischer Steuerdruck kleiner als ein vorbestimmter Schwellenwert ist.

4. Vorrichtung nach einem der vorhergehenden Ansprüche, **dadurch gekennzeichnet, dass** die rotatorischen Verbindungsmittel der Schwungräder radial außerhalb der Kopplung sind.

5. Vorrichtung nach einem der vorhergehenden Ansprüche, **dadurch gekennzeichnet, dass** die Verbindungmittel durch eine Kupplung gebildet sind, die axial geklemmte Scheiben umfasst.

6. Vorrichtung nach einem der Ansprüche 1 bis 5, **dadurch gekennzeichnet, dass** die erste Scheibe (118) in der Ruhestellung des Stellglieds (48) zwischen der zweiten Scheibe (120) und einer dritten Scheibe (120), die vom Deckel der Kupplung (54) getragen wird, geklemmt ist.

7. Vorrichtung nach einem der Ansprüche, 1 bis 6, **dadurch gekenntzeichnet, dass** die erste Scheibe (118) Reibbeläge trägt oder aus Kunststoff ist.

8. Vorrichtung nach Anspruch 6 oder 7, **dadurch gekennzeichnet, dass** die zweite und die dritte Scheibe (120) interne Verzahnungen zur drehfesten Verbindung mit dem Deckel der Kupplung (54) aufweisen und dass sie sich axial auf Widerlagern oder radialen Stützen (122, 124) der Anpressplatte (46) oder ihrer Stel!mittel (52) und des Deckels der Kupplung (54) stützen.

9. Vorrichtung nach einem der vorhergehenden Ansprüche, **dadurch gekennzeichnet, dass** das Stellglied einen axialen hydraulischen Zylinder (48) umfasst, der um die getriebene Welle (38) montiert ist, wobei dieser Zylinder (48) einen Ringkolben (64) führt, der translatorisch um die getriebene Welle geführt wird und auf ein mit der Anpressplatte (46) verbundenes Kupplungsausrücklager (62) wirkt.

10. Vorrichtung nach einem der Ansprüche 1 bis 7, **dadurch gekenntzeichnet, dass** das Stellglied ein mechanisches Stellglied ist, beispielsweise mit einer Spiralrampe.

11. Vorrichtung nach einem der Ansprüche 2 bis 10, **dadurch gekennzeichnet, dass** die elastischen Mittel, die auf das Stellglied (48) und auf die rotatorischen Verbindungsmittel der Schwungräder wirken, durch die ringförmige Membranfeder (50) der Kupplung (E1) gebildet werden.

12. Vorrichtung nach einem der vorhergehenden Ansprüche, **dadurch gekennzeichnet, dass** sie eine zweite Kupplung (E2) umfasst, die parallel zur ersten Kupplung (E1) montiert und dazu vorgesehen ist, das sekundäre Schwungrad mit einer koaxial zur ersten getriebenen Welle (38) angeordneten zweiten getriebenen Welle (90) zu verbinden, wobei die beiden Kupplungen denselben Kupplungsdeckel (54) aufweisen, der von der Reaktionsplatte (36) der ersten Kupplung (E1) getragen wird.

13. Vorrichtung nach Anspruch 12, **dadurch gekennzeichnet, dass** die erste Kupplung (E1) axial zwischen der zweiten Kupplung (E2) und dem primären Schwungrad (11) montiert ist und dass die zweite Kupplung (E2) eine Reaktionsplatte (80) umfasst, durch die die Betätigu"igsschiebor (52) der Anpressplatte (46) der ersten Kupplung (E1) hindurchgehen.

14. Vorrichtung nach Anspruch 13, **dadurch gekennzeichnet, dass** die Betätigungsschieber (52) radiale Stützen (124) umfassen, die Bestandteil der rotatorischen Verbindungsmittel der Schwungräder sind.

15. Vorrichtung nach Anspruch 13 oder 14, **dadurch gekennzeichnet, dass** die Betätigungsschieber (52) durch eine ringförmige Membranfeder (50) mit dem Stellglied (48) der ersten Kupplung (E1) verbunden wind.

16. Vorrichtung nach einem der Ansprüche 12 bis 15, **dadurch gekennzeichnet, dass** die Steuermittel der zweiten Kupplung (E2) ein zweites Stellglied umfassen, das durch einen axialen hydraulischen Zylinder (106) gebildet wird, der in dem Zylinder (48) des ersten Stellglieds montiert ist.

17. Vorrichtung nach einem der vorhergehenden Ansprüche, **dadurch gekennzeichnet, dass** das primäre Schwungrad (11) ein flexibles Schwungrad ist.

18. Vorrichtung nach einem der vorhergehenden Ansprüche, **dadurch genennzeichnet, dass** der Torsionsdämpfer (20) radial innerhalb des sekundären Schwungrads und der ersten Kupplung (E1) angeordnet ist.

19. Vorrichtung nach einem der vorhergehenden Ansprüche, **dadurch gekennzeichnet, dass** der Torsionsdämpfer (20) kurze Federn (24) mit umfangsmäßigen Anordnung umfasst.

20. Vorrichtung nach einem der vorhergehenden Ansprüche, **dadurch gekennzeichnet, dass** ein Ende (114) des Deckels der Kupplung (54) vermittels eines Lagers (112), das ein widerlager zur Lastaufnahme bildet, auf dem Stellglied (48) montiert ist.

21. Vorrichtung nach einem der vorhergehenden Ansprüche, **dadurch gekennzeichnet, dass** die Mittel der mechanischen Lockerung ein reduziertes Hysterese-Reibungsmoment erzeugen, wenn die Räder rotatorisch getrennt werden.

22. Vorrichtung nach einem der Ansprüche 3 bis 21, **gekennzeichnet durch** eine Verzögerung zwischen der Aufhebung des Steuerdrucks des Stellglieds (48) und dem Stillstand eines Antriebsmotors der Antriebswelle (10).

23. Vorrichtung nach einem der vorhergehenden Ansprüche, **dadurch gekennzeichnet, dass** das Stellglied (48) einen Positionssensor (194, 196) eines mobilen Steuerelements umfasst.

24. Vorrichtung nach Anspruch 23, **dadurch gekennzeichnet, dass** es der Positionssensor (194, 196) ermöglicht, durch Lernen die Position zu Hubbeginn zu bestimmen, die eine relative Drehung der Schwungräder erlaubt, ohne den Zustand der Kupplung (E1) zur ändern.
